# EUROPEAN PATENT SPECIFICATION

(11) **EP 0 300 043 B1**
(45) Date of publication and mention of the grant of the patent: **13.04.1994**
(21) Application number: 88901095.5
(22) Date of filing: 21.01.1988
(51) Int. Cl.: B68G 7/00

(54) **TRIM COVER FOR SEAT**
SITZÜBERZUG
HOUSSE DE GARNITURE POUR SIEGES

(30) Priority: 23.01.1987 JP 12520/87
(43) Date of publication of application: 25.01.1989
(73) Proprietor: TACHI-S CO. LTD., Akishima-shi Tokyo196 (JP)
(72) Inventor: URAI, Muneharu, Akishima-shi Tokyo 196 (JP)
(74) Representative: Marietti, Giuseppe
(86) International application number: JP8800042
(87) International publication number: WO8805420

(56) References cited:
- JP-A- 6 066 783
- JP-U- 6 020 900
- JP-U- 6 036 798
- JP-U- 6 160 798
- No relevant documents have been disclosed.

## Description

### Technical Field

This invention relates to a seat for use in a vehicle or the like, which seat can be easily finished to show a beautiful appearance and can be made with decreased man-hours, hence, at a reduced cost.

### Background Art

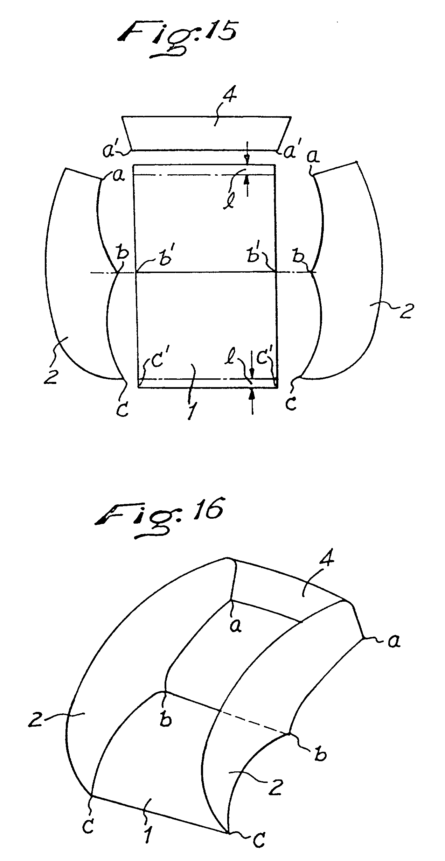

Prior art trim covers of seats will be briefly described with reference to Figs. 13 to 16, before describing the present invention in detail.

Figs. 13 and 14 show a prior art trim cover covering a front back of a seat for use in, for example, a vehicle. Fig. 13 is a planar developed view of a trim cover material consisting of a cover member, a filler pad and a backing cloth. As shown in Fig. 13, the trim cover material is divided by cutting it into four parts, that is, a seat base part 1, a pair of flap parts 2 on both sides of the seat base part 1, and an upper extension 3 of the seat base part 1. Fig. 14 is a schematic perspective view showing that these parts 1, 2 and 3 are assembled into a three-dimensional shape as by machine sewing, and the flap parts 2 form a three-dimensional bucket. Lines a-b-c of the flap parts 2, lines a'-b' of the upper extension 3 of the seat base part 1 and lines b'-c' of the seat base part 1 in Fig. 13 are joined to form lines a-b-c of the three-dimensional seat shape shown in Fig. 14. Therefore, the individual parts 1, 2 and 3 shown in Fig. 13 are developed on a plane and cut while taking the three-dimensional seat shape into consideration.

Figs. 15 and 16 show a trim cover of a front cushion of a seat for use in, for example, a vehicle. Individual parts 1, 2 and 4 of the trim cover shown in Figs. 15 and 16 are arranged and assembled into a three-dimensional shape in a manner similar to that described with reference to Figs. 13 and 14. The seat base part 1 is cut to have an extra length l at each of its upper and lower ends, becuase it is shaped into a curved form as shown by lines a-b-c in Fig. 16.

As described above, each of the front back and the front cushion is composed of at least four parts. A trim cover of a rear seat (not shown) is composed of a further larger number of parts, and material losses occur inevitably during cutting and assembling these parts. A skilled worker is required for assembling those parts as by a sewing machine, and, because of manual making, many man-hours are required. Further, the finished seats are not always uniform in the dimensional accuracy, etc., and rejects are produced due to the presence of wrinkles which impair the otherwise beautiful appearance.

JP-U-60-20900 discloses a single piece trim cover consisting of a cover member, a filler pad and a backing cloth. In order to avoid wrinkles forming on the cover member when the trim cover is bent into a three-dimensional shape, JP-U-60-20900 provides to insert a special porous adhesive material between the cover member and the filler pad. This material is subsequently subjected to high frequency welding to adhere it to cover member and filler pad.

This results in two main drawbacks: highly expensive and very complex high-frequency molds are required, and difficulties arise in correctly positioning the different parts within the mold to avoid displacement during molding steps.

It is therefore an object of the present invention to provide a novel trim cover of a seat which solves the prior art problems described above.

### Disclosure of the Invention

In accordance with one aspect of the present invention, there is provided a trim cover of a seat comprising a single planar material in the form of a laminate consisting of a cover member, at least in part coupled with a filler pad and a backing cloth to form a seat base part, a pair of flap parts on both sides of the seat base part, and an upper extension or a rear extension of the seat base part joined together by a plurality of joint lines (w) partitioning the individual parts and the extention, each of said joint lines (w) having a groove (v) formed thereon along which said laminate is bent to build up a three-dimensional shape of the seat, characterized in that said laminate is shaped in three-dimensional seat form utilizing local stretching and deformation of the material in the neighborhood of said joint lines between said flap parts, base part and upper or rear extention of the seat. In accordance with the other aspect of the invention, there is a process as defined in Claim 9. Preferred embodiments of the invention are defined in dependant claims 2 to 8.

### Brief Description of the Drawings

Figs. 1 through 12 relate to the present invention in which:
Fig. 1 is a plan view of a front back formed of a single trim cover material;
Fig. 1A is a plan view of a modification of the front back shown in Fig. 1;
Fig. 2 is a perspective view of the front back shaped into its three-dimensional form;
Fig. 3 is a planar developed view of a front cushion formed of a single trim cover material;
Fig. 4 is a perspective view of the front cushion shaped into its three-dimensional form;
Figs. 5 and 6 are sectional views of part of the trim cover shown in Fig. 1 when thermally welded at a joint line;
Figs. 7 and 8 are sectional views taken on one of the lines A-B-C in Fig. 2;
Fig. 9 is a sectional view taken along the line c-d in Fig. 4;
Fig. 10 is a sectional view taken along the line e-f in Figs. 1 and 2;
Fig. 11 is a sectional view taken along the line g-h in Fig. 2; and
Fig. 12 is a sectional view taken along the line i-j in Fig. 2.

Figs. 13 through 16 relate to the prior art in which:
Fig. 13 is a plan view of a prior art trim cover;
Fig. 14 is a perspective view of the prior art trim cover;
Fig. 15 is a plan view of planar cut parts of the prior art trim cover; and
Fig. 16 is a perspective view of the prior art trim cover formed by assembling the individual parts as by sewing with a sewing machine.

### Best Mode for Carrying Out the Invention

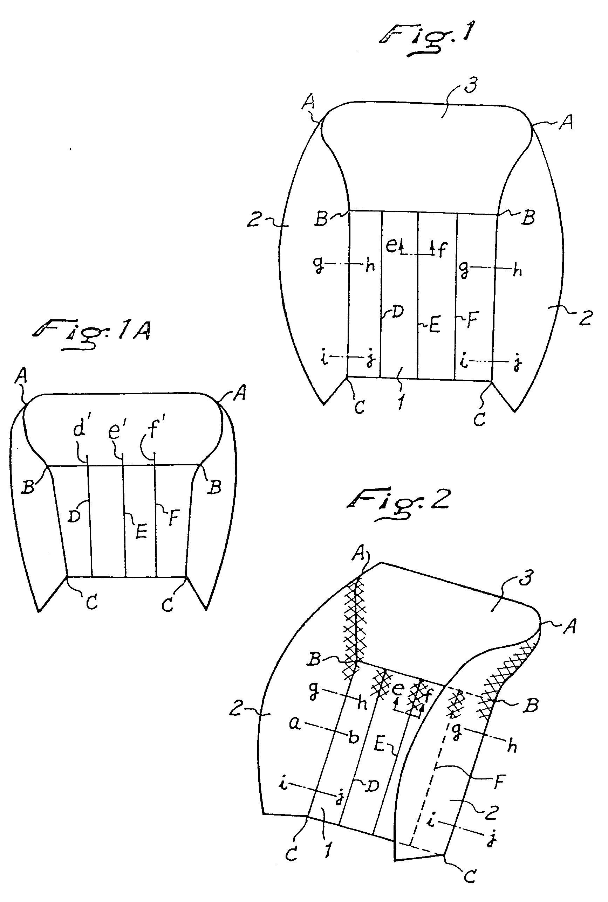

Preferred embodiments of the present invention will now be described in detail with reference to Figs. 1 through 12.

Fig. 1 is a planar developed view of a front back formed of a single trim cover material, and Fig. 2 is a perspective view of the front back shaped into its three-dimensional form. The single trim cover material includes a three-layer laminate consisting of a cover member, a thin filler pad and a backing cloth.

Sections taken on the lines A-B-C, D, E and F in Fig. 1 are as shown in Fig. 5 or 6. As will be seen in Fig. 5 or 6, any one of joints w between a seat base part 1, flap parts 2 and an upper extension 3 of the seat base part formed of a three-layer laminate consisting of a cover member 5, a filler pad 6 and a backing cloth 7 is formed with a triangular groove v. The joint w is provided by thermal welding such as high-frequency welding, ultrasonic welding or hot pressing. This joint w may be provided by machine sewing.

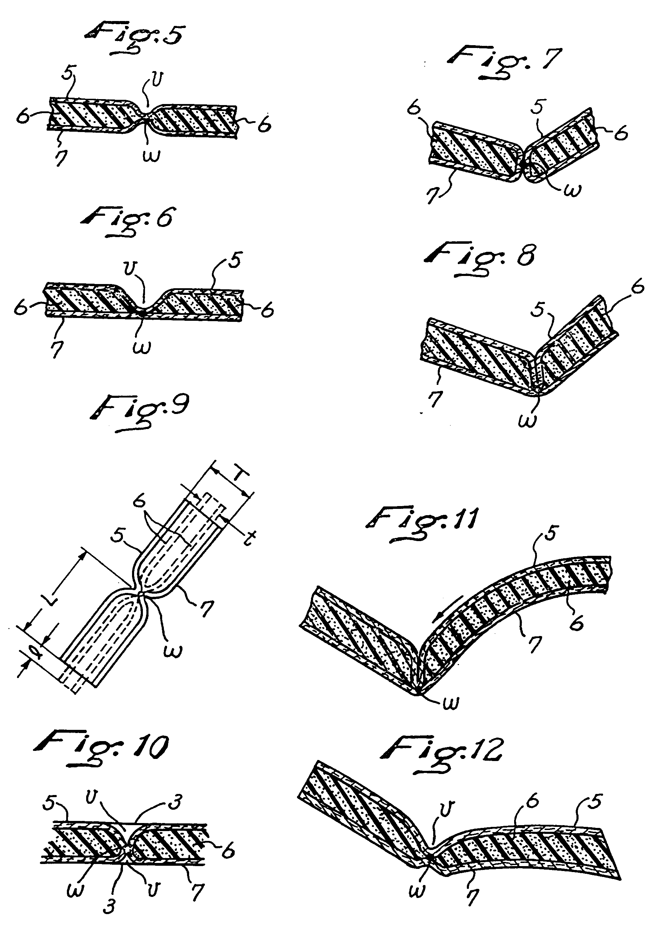

Each of joint lines of the joints w (that is, boundaries between the parts 1, 2 and 3) is in the form of a narrow web, a fine line, a series of fine perforations or a series of stitches formed by machine sewing. Each of these grooves v is bent as shown in Fig. 7 or 8 which is a sectional view taken on one of the lines A-B-C in, for example, Fig. 2.

Figs. 11 and 12 are sectional views taken along the respective lines g-h and i-j extending between the seat base part and the bucket part in Fig. 2. It will be seen that the angle of bend relative to the horizontal plane is larger in Fig. 11 than in Fig. 12. Thus, the joint w is forced downward to pull the cover member 5 downward, and the flap parts 2 provide a wrinkle-free bucket structure. In Figs. 11 and 12, the portions of the filler pad 6 and backing cloth 7 on the right-hand side of the joint w may be eliminated to leave the cover member 5 above. Even in such a case, the three-dimensional bucket seat can be made because of the presence of the groove v at the joint w. Similarly, in a rear seat (not shown) too, a single trim cover material can be used, and the portions of the filler pad 6 and backing cloth 7 except those of the seat base part 1 can be eliminated.

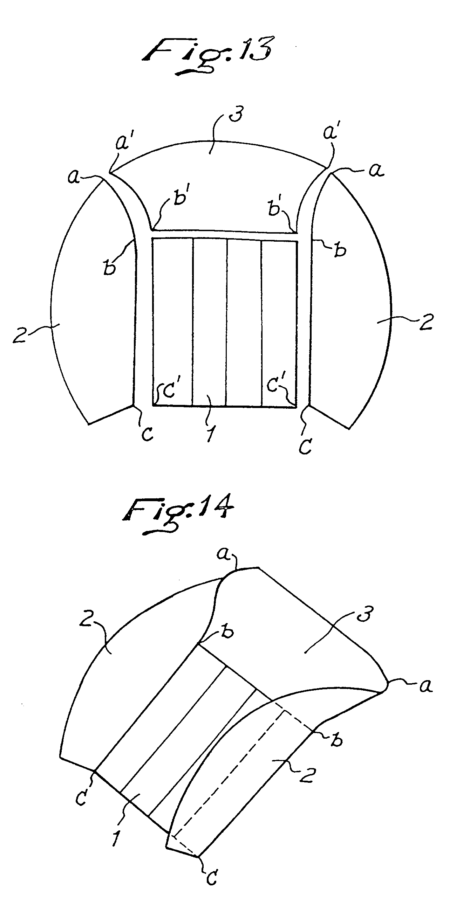

At cross-hatched portions in Fig. 2, the flap parts 2 (the bucket part) are stretched relative to the seat base part 1 and the upper extension 3 of the seat base part 1. Fig. 10 is a sectional view taken along the line e-f in Fig. 1 or 2. It will be seen in Fig. 2 that, although the cover member 5 of the trim cover forming the upper extension 3 of the seat base part 1 is not stretched, the portion of the cover member 5 in each of the crossed-hatched areas (the cover member 5 in the groove v in Fig. 10) is stretched. The above state means that the thickness of the trim cover portion in each of the cross-hatched areas is decreased from T to t, while the length is increased from L to (L+l) as shown in Fig. 9 which is a sectional view taken along the line c-d in Fig. 4.

In Fig. 1A, lines A-C, B-B, D, E and F are formed by bonding with thermal welding or machine sewing. In the case of sewing with a sewing machine, extensions d', e' and f' of the respective lines D, E and F are sewn in intersecting relation with the line B-B, and there is thus no possibility that the lines D, E and F are frayed relative to the line B-B. Since the line B-B is pulled inward during assembling the bucket seat, the line B-B forms the bottom line of the bucket shape. Therefore, when the extensions d', e' and f' extending toward and onto the upper extension 3 of the seat base part 1 have a short length, they are drawn into the bottom of the bucket seat so that they are not visible from the outside. Fig. 1A illustrates an example in which the lines D, E and F as well as the line B-B having both ends terminating at inner positions of the seat are sewn without causing loosening. In this case, a sewing machine capable of, for example, double sewing, final sewing and back stitching can be used for the above and other purposes.

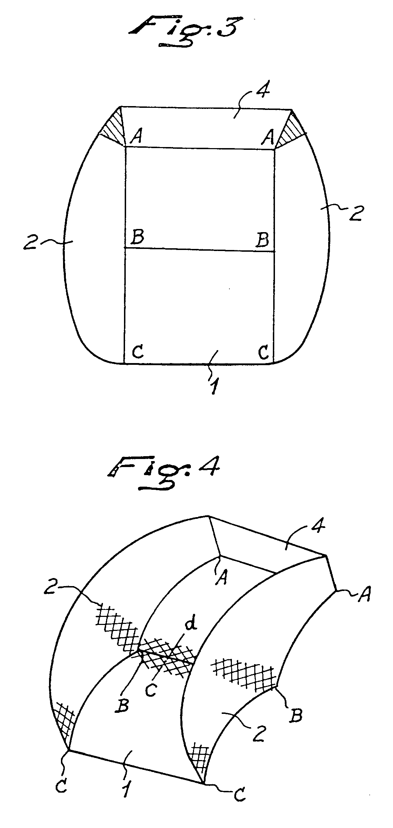

Fig. 3 is a planar developed view of a front cushion formed of a single trim cover material, and Fig. 4 is a perspective view of the front cushion shaped into its three-dimensional form. Any description of the method for making such a front cushion is unnecessary because the method is similar to that of or an application of the method of making the front back shown in Figs. 1 and 2. In the front cushion shown in Fig. 3, hatched triangular portions of the rear extension 4 of the seat base part 1 are cut away or bent outwardly to form corners. The outwardly bent portions are sewn to or inserted into corresponding recesses of a molded polyurethane foam and bonded thereto. This technique can be applied to other portions such as those of a front back.

That is, the above technique is applicable to a case where formation of the desired three-dimensional seat shape by a single trim cover is difficult due to a low stretchability of the trim cover or a case where wrinkles tend to appear on the three-dimensional seat although the single trim cover is sufficiently stretchable. In such a case, the trim cover is locally cut to remove unnecessary trim cover portions, and the remaining trim cover portions are sewn together, or separately prepared trim cover portions are sewn onto areas where shortage of the trim cover occurs. The above description has not referred to side parts (peripheral parts) of the trim cover covering the seat. However, it is apparent that such side parts are commonly normally connected to the outer ends of the seat base part and flap parts of the trim cover and are supported on a supporting member such as a cushion or a frame.

In the present invention, the single trim cover shown in planar developed view in Fig. 1 or 3 is shaped into a three-dimensional form as shown in Fig. 2 or 4. The present invention provides the following advantages:
a) The joint w and the groove v shown in Fig. 5 or 6 act to accurately determine the portion where the trim cover is to be bent.
b) The deformation of the trim cover shown by l in Fig. 9 or the inward drawing of the cover member 5 shown in Fig. 11 can be provided when the trim cover is flexible even if it may not be fully stretchable. It is apparent that the shaping is easier when the trim cover is fully stretchable.
c) When the cover member 5 and the filler pad 6 are bonded together, wrinkles attributable to deformation of the cover member 5 only do not occur because the filler pad 6 is integrally bonded to the cover member 5.
d) Even when the trim cover consists of the cover member 5 only without the provision of the filler pad 6 and the backing cloth 7 or even when the trim cover consists of the cover member 5 and the filler pad 6 only without the provision of the backing cloth 7, the trim cover can be shaped into the desired three-dimensional form provided that the grooves v are formed on the trim cover.
e) In the prior art trim cover shown in Fig. 14, the joint a-b-c is convex at the portion in contact with a molded polyurethane foam (not shown). In the trim cover of the present invention, the joint w is not convex as shown in Fig. 7 or 8, and the trim cover conforms with the outer shape of a molded polyurethane foam. Therefore, the trim cover can be easily and reliably bonded to the molded polyurethane foam, so that the three-dimensional shape after shaping can be accurately maintained.
f) The present invention obviates the defects of the prior art trim cover. That is, the present invention decreases the number of required parts, decreases the cutting losses and the losses of the material during joining the parts, eliminates the necessity for a skilled worker, and eliminates occurrence of wrinkles and other defects. Therefore, the quality of seats can be improved, and the cost of the seats can be reduced.

### Industrial Applicability

The present invention is not only applicable to the trim cover of the bucket seats but also applicable to rear seats and other similar articles such as vehicle's inner equipments and articles of furniture.

## Claims

1. A trim cover of a seat comprising a single planar material in the form of a laminate consisting of a cover member (5), at least in part coupled with a filler pad (6) and a backing cloth (7) to form a seat base part (1), a pair of flap parts (2) on both sides of the seat base part, and an upper extension (3) or a rear extension of the seat base part joined together by a plurality of joint lines (w) partitioning the individual parts and the extension, each of said joint lines (w) having a groove (v) formed thereon along which said laminate is bent to build up a three-dimensional shape of the seat, characterized in that said laminate is shaped in three-dimensional seat form utilizing local stretching and deformation of the material in the neighborhood of said joint lines between said flap parts, base part and upper or rear extension of the seat.

2. A trim cover according to claim 1, wherein said laminate is bent at said grooves (v) by stretching the corresponding portions of the cover member (5) or by pulling the cover member toward the backing cloth (7).

3. A trim cover according to claim 1, wherein unnecessary corner portions protruding from the boundaries between the flap parts (2) and the seat base part (1) or the rear extension (3) of the seat base part are cut away to shape the trim cover into the three-dimensional seat form.

4. A trim cover according to claim 3, modified in that said corner portions are bent outwardly and bonded to a molded foam cushion supporting said trim cover after being inserted into corresponding recesses of the said molded foam cushion.

5. A trim cover according to any previous claim, wherein part of the filler pad (6) and/or part of the backing cloth (7) is removed from the trim cover.

6. A trim cover according to claim 1, wherein said joint line and said groove (B-B) are formed between said seat base part (1) and said upper extension (3) of said seat base part, and a plurality of longitudinal grooves (D, E, F) are formed on said seat base part in a state where the trim cover member of said seat base part is stretched.

7. A trim cover according to claim 6, wherein said plural longitudinal grooves (D, E, F) formed on said seat base part have their ends (d', e', f') extended partly toward and onto said upper extension beyond said joint line and said groove (B-B).

8. A seat comprising a molded foam cushion and a single piece trim cover according to any claim 1 to 7.

9. A process for preparing a seat trim cover, said cover comprising a sigle piece of laminated material consisting of a cover member (5), a filler pad (6) and a backing cloth (7) and comprising a seat base part (1), lateral flap parts (2), and an upper extension or rear extension (3; 4) of the seat base part, said process comprising the steps of forming a plurality of joint lines (w) having grooves (v) thereon, and bending the trim cover along said grooves, characterized in that three-dimensional seat form is obtained by locally deforming and stretching said trim cover in the neighborhood of said joint lines between said flap parts, base part and upper or rear extension of the seat.

## Patentansprüche

1. Bedeckung eines Sitzes aus einem einzigen glatten Material in Form einer Folie, die aus einem Bedeckungselement besteht, teilweise mit einer Füllung (6) und mit einem Trägermaterial (7) verbunden, zur Bildung des Hauptbestandteiles des Sitzes (1), ein Paar Umschlagteile (2) auf beiden Seiten des Hauptbestandteiles des Sitzes und eine obere oder eine hintere Ausdehnung (3) des Hauptbestandteiles des Sitzes, durch eine Pluralität von Vorbindungslinien (w) verbunden, die die individuellen Teile und die Ausdehnung aufteilen, wobei jeder dieser Verbindungslinie (w) eine Rille aufweist worauf die Folie zu einer dreidimensionalen Struktur des Sitzes gebogen wird, dadurch gekennzeichnet daß, die vorhergenannte Folie durch Dehnung und Verbiegung des Materials, im Bereich der Verbindungslinien zwischen den Umschlagteilen, Hauptbestandteil und oberer oder hinterer Ausdehnung des Sitzes, zu einer dreidimensionalen Form des Sitzes modelliert wird.

2. Bedeckung eines Sitzes nach Anspruch 1, wobei die Folie entweder durch Dehnung der entsprechenden Teilen des Bedeckungselements (5) oder durch Ziehen des Bedeckungselements in Richtung des Trägermaterials (7), auf den Rillen (v) gebogen ist.

3. Bedeckung eines Sitzes nach Anspruch 1, wobei die unnötigen Teile, die die Grenzen zwischen den Umschlägen (2) und dem Hauptbestandteil des Sitzes (1) oder der hinteren Ausdehnung (3) überschreiten, weggeschnitten werden um die Bedeckung zu einem dreidimensionalförmigen Sitz zu modellieren.

4. Bedeckung nach Anspruch 3, so verändert daß die Eckteile, zur Unterstützung der Bedeckung, nach außen gebogen werden und in Verbindung mit einem modellierten Schaumpolster gesetzt werden, nachdem die vorhergenannte Bedeckung in den entsprechenden Höhlungen des erwähnten Schaumpolsters eingefügt worden ist.

5. Bedeckung nach irgendeinem der vorigen Ansprüche, dadurch gekennzeichnet daß, Teil der Füllung (6) und/oder Teil des Trägermaterials von der Bedeckung entfernt wird.

6. Bedeckung nach Anspruch 1, wobei die Verbindungslinien und die Rillen (B-B) zwischen dem Hauptbestandteil des Sitzes (1) und der oberen Ausdehnung (3) des Hauptbestandteiles des Sitzes vorhanden sind, und wobei eine Pluralität von Längsrillen (D,E,F,), wodurch das Bedeckungselement des Hauptbestandteiles des Sitzes gedehnt ist, im Bereich des Hauptbestandteiles des Sitzes vorhanden sind.

7. Bedeckung nach Anspruch 6, wobei die Enden (d'e'f'), der sich im Bereich des Hauptbestandteiles des Sitzes befindenden Pluralität von Längsrillen, zum Teil in Richtung und auf der oberen Ausdehnung, über die Verbindungslinien und die Rillen (B-B), vorhanden sind.

8. Bedeckung nach einer der Ansprüche von 1 bis 7 mit einem modellierten Schaumpolster und einer einfachen Bedeckung.

9. Verfahren zum Herstellen einer Bedeckung aus einem einzelnen Folienmaterial, das aus einem Bedeckungselement (5), einer Füllung (6) und einem Trägermaterial (7) besteht, sowie einem Hauptbestandteil des Sitzes (1), seitlichen Umschlagteilen (2) und einer oberen oder unteren Ausdehnung (3); dieser Verfahren sieht Schritte zur Bildung einer Pluralität von Verbindungslinien (w) mit Rillen (v) vor, auf denen die Deckung gebogen wird, wobei die dreidimensionale Form durch Ausdehnung und Verformung der Bedeckung im Bereich der Verbindunglinien, zwischen Umschlagteile, Hauptbestandteil und oberer oder hinterer Ausdehnung des Sitzes, erhaltbar ist.

## Revendications

1. Une housse de garniture pour sièges comportant une seule matière plane sous la forme d'un stratifié composé d'une piéce de couverture (5), au moins en partie accouplée avec un matelas de rembourrage (6), et d'une toile de renfort (7) afin de former une partie de base (1) du siège, une paire de parties latérales (2) sur les deux côtés de la partie de base du siège et un prolongement supérieur (3) ou prolongement arrière de la partie de base du siège, reliés ensemble par une pluralité de lignes d'assemblage (w) séparant les parties individuelles et le prolongement, chacune desdites lignes d'assemblage (w) ayant une gorge (v) formée dans la même et le long de laquelle ledit stratifié est plié de manière à constituer une forme tridimensionnelle du siège, caracterisée en ce que ledit stratifié est formé dans une forme tridimensionnelle de siège en exploitant des tractions locales et des déformations de la matiére à proximité desdites lignes d'assemblage entre lesdites parties laterales, ladite partie de base et ledit prolongement supérieur ou arrière du siège.

2. Housse de garniture suivant la revendication 1, caractérisée en ce que ledit stratifié est plié auxdites gorges (v) en tendant les parties correspondantes de la pièce de couverture (5) ou en tirant la pièce de couverture vers la toile de renfort (7).

3. Housse de garniture suivant la revendication 1, caractérisée en ce que les parties inutiles de coin dépassant des limites entre les parties laterales (2) et la partie de base (1) du siège ou le prolongement arrière (3) de la partie de base du siège sont coupées afin de donner à la housse de garniture la forme tridimensionelle du siège.

4. Housse de garniture suivant la revendication 3, modifiée en ce que lesdites parties de coin son pliées vers l'extérieur et fixées à un coussin en mousse moulée qui soutient ladite housse de garniture, après avoir été insérées dans des évidements correspondants prévus dans ledit coussin en mousse moulée.

5. Housse de garniture suivant une des revendications précedentes, caractérisée en ce qu'une partie du matelas de rembourrage (6) et/ou une partie de la toile de renfort (7) est retirée de la housse de garniture.

6. Housse de garniture suivant la revendication 1, caractérisée en ce que ladite ligne d'assemblage et ladite gorge (B-B) sont formées entre ladite partie de base (1) du siége et ledit prolongement supérieur (3) de ladite partie de base, et en ce qu'une pluralité de gorges longitudinales (D, E, F) sont formées sur ladite partie de base du siège alors que la housse de garniture de ladite partie de base se trouve tendue.

7. Housse de garniture suivant la revendication 6, caractérisée en ce que les extrèmités (d', e', f') de ladite pluralité de gorges longitudinales (D, E, F) formées sur ladite partie de base du siège se prolongent en partie vers et sur ledit prolongement supérieur, au delà de ladite ligne d'assemblage et de ladite gorge (B-B).

8. Siège comprénant un coussin en mousse moulée et une housse de garniture en une seule pièce suivant une quelcounque des revendications 1 à 7.

9. Procédé pour préparer une housse de garniture pour siège, ladite garniture comprenant une seule piece de matière stratifiée composée d'une pièce de couverture (5), d'un matelas de rembourrage (6) et d'une toile de renfort (7), et comprenant une partie de base (1) du siège, des parties laterales (2) et un prolongement supérieur ou un prolongement arrière (3;4) de la partie de base du siège, ledit procedé comprenant les phases de former une pluralité de lignes d'assemblage (w) ayant des gorges sur les mêmes, et de plier la housse de garniture le long desdites gorges, caracterisé en ce que la forme tridimensionelle du siège est obtenue par déformation locale et tension de ladite housse de garniture à proximité desdites lignes d'assemblage entre lesdites parties laterales, ladite partie de base et ledit prolongement supérieur ou arrière du siège.
